# NOUVEAU FASCICULE DE BREVET EUROPEEN

(11) **EP 0 568 135 B2**
(45) Date de publication et mention de la décision concernant l'opposition: **17.07.2002**
(45) Mention de la délivrance du brevet: 12.08.1998
(21) Numéro de dépôt: 93201095.2
(22) Date de dépôt: 15.04.1993
(51) Int. Cl.: C08J 7/12, B29C 49/46

(54) **Procédé pour la production de corps creux imperméables et corps creux ainsi obtenus**
Verfahren zur Herstellung von undurchlässigen Hohlkörpern und so hergestellte Hohlkörper
Process for producing impermeable hollow bodies and hollow bodies thus produced

(30) Priorité: 29.04.1992 BE 9200400
(43) Date de publication de la demande: 03.11.1993
(73) Titulaire: Inergy Automotive Systems Research (SA), 1120 Bruxelles (BE)
(72) Inventeur: Masson, Didier, B-1020 Bruxelles (BE)
(74) Mandataire: Decamps, Alain René François

(56) Documents cités:
- EP-A- 0 039 929
- EP-A- 0 500 166
- EP-A- 0 566 883
- DE-A- 3 535 602
- DATABASE WPIL Week 8916, Derwent Publications Ltd., London, GB; AN 89-119515

## Description

L'invention concerne un procédé pour la production de corps creux imperméables, tels que des réservoirs à essence, obtenus à partir d'une matière thermoplastique.

Les corps creux en matières thermoplastiques tels que des réservoirs à essence pour véhicules automobiles présentent vis-à-vis de leurs équivalents en métal de nombreux avantages, entre autres : une meilleure résistance à l'impact, une meilleure résistance à la corrosion, un gain de poids, une plus grande liberté de formes, etc.

En général, ces corps creux sont produits par la technique de moulage par extrusion soufflée qui implique l'extrusion d'une paraison tubulaire et la mise en forme, par soufflage, de portions de cette paraison enfermées dans des moules appropriés.

Toutefois, ces réservoirs, en particulier lorsqu'ils sont réalisés, ainsi qu'il est de pratique courante, à partir de polyoléfines, présentent l'inconvénient de permettre une diffusion indésirable des hydrocarbures qui y sont stockés au travers de leur paroi.

La perméabilité de ces réservoirs peut toutefois être sensiblement diminuée par des moyens particuliers tels que : dépôt d'un revêtement imperméable, traitement par des gaz réactifs (fluor, anhydride sulfurique, etc.) en ligne de fabrication ou en discontinu, traitement par plasma, emploi d'un mélange de polymères non miscibles, coextrusion avec a matériau faisant barrière à la diffusion, etc.

En particulier, le traitement de la paroi interne de ces corps creux par des gaz réactifs tels que le fluor comme décrit dans le brevet US-A-3 647 613 ou tels que l'anhydride sulfurique comme décrit dans le US-A-4 861 250 se révèle particulièrement intéressant, un traitement direct en ligne de fabrication étant généralement préférable.

Toutefois, compte tenu de l'introduction sur le marché des carburants mixtes contenant des composés oxygénés tels que le méthanol et la mise en vigueur de normes sévères de limitation de la pollution et de respect de l'environnement, il est devenu primordial d'effectuer sur ces réservoirs des traitements d'imperméabilisation par des gaz réactifs particulièrement performants qui exigent, en particulier, un contrôle sévère de la vitesse de réaction entre le gaz et la paroi traitée.

On sait, en effet, que la paroi interne d'un réservoir moulé par soufflage à partir d'une polyoléfine présente en surface, avant introduction du gaz réactif, un nombre très important de sites réactionnels (liaisons carbone-hydrogène).

La réaction entre le gaz réactif et la paroi interne étant fortement exothermique, l'introduction de gaz réactif en grande quantité sur le polymère vierge produit, dès lors, un dégagement de chaleur localisé important qui peut devenir incontrôlable et qui entraîne une réorganisation de la matière en surface pouvant engendrer la rupture non souhaitable des liaisons carbone-carbone du polymère.

Par ailleurs, au fil du temps, la vitesse de la réaction peut chuter fortement car, d'une part la densité des sites réactionnels encore libres diminue et, d'autre part, les atomes de gaz réactif fixés sur le polymère forment un écran entre les sites réactionnels subsistants et le gaz réactif qui n'a pas encore réagi.

Un traitement efficace consiste, dès lors, à limiter la vitesse de réaction en début de traitement et à maintenir cette vitesse au cours du traitement.

Un traitement répondant partiellement à ces impératifs est déjà proposé dans le brevet EP-B-270 776.

Dans ce document, on préconise de débuter le traitement en ligne de corps creux par un gaz réactif tel que le fluor lorsque sa surface interne a atteint une température se situant préférentiellement à une température inférieure à la température de fin de cristallisation (80 à 120 °C).

Toutefois, lors de la réalisation de réservoirs à carburant en polyoléfines qui peuvent présenter des épaisseurs de paroi pouvant varier de 3 à 10 mm, il est clair que le refroidissement de la paroi interne par l'intermédiaire du moule ne peut être homogène car le refroidissement par le moule dépend du carré de l'épaisseur de paroi du réservoir et un refroidissement supplémentaire provoqué par le fluide de soufflage à température ambiante ne peut compenser ce manque d'homogénéité.

Par ailleurs, dans un tel procédé, le délai d'attente avant l'introduction du gaz réactif est pénalisant pour la cadence de production et augmente donc le prix de revient du réservoir. Pour des réservoirs d'une épaisseur moyenne classique de 5 mm, il est, par exemple, nécessaire de patienter plus d'une minute pour que la température de la paroi soit inférieure à 130°C.

Enfin, dans la technique proposée, la surface interne du réservoir se refroidit constamment au cours du temps, ce qui va à l'encontre de l'objectif d'une progressivité de la réaction avec le gaz réactif.

Le document EP-A1-0039929 divulgue un procédé de production de corps creux par extrusion-soufflage selon lequel, après le soufflage du corps creux, en ce compris son traitement superficiel par un gaz réactif, ledit corps creux est purgé par introduction d'un gaz de purge, en vue de la récupération et de la réutilisation du gaz de soufflage. Toutefois, cette introduction d'un gaz de purge ne saurait avoir d'incidence sur les conditions opératoires du traitement superficiel effectué antérieurement.

La présente invention concerne, dès lors, un procédé de traitement en ligne de corps creux, tels que des réservoirs à essence, produits par moulage par soufflage à partir d'une matière thermoplastique qui ne présente plus les inconvénients sus-mentionnés.

Plus particulièrement, l'invention concerne un procédé pour la production de corps creux, tels que des réservoirs à essence, par moulage par extrusion soufflée à partir d'une matière thermoplastique, dans lequel la paroi interne du corps creux moulé est directement traitée en ligne par un gaz réactif en vue d'accroître son imperméabilité qui se caractérise en ce que, en vue du traitement par le gaz réactif, la paroi interne du corps creux est refroidie superficiellement par un fluide gazeux introduit à une température au plus égale à - 50 °C. et que le gaz réactif introduit dans le corps creux est injecté à température croissante.

En général, on préfère que la température du fluide gazeux introduit dans le réservoir soit de - 60 à - 150 °C.

Dans le procédé conforme à l'invention, le fluide gazeux très froid introduit dans le réservoir produit uniquement un refroidissement uniforme, rapide et poussé d'une mince pellicule superficielle de sa paroi interne, le reste de la paroi du réservoir restant pratiquement à une température inchangée.

En fait, par le procédé selon l'invention la paroi interne est figée superficiellement à une température qui peut être contrôlée de façon à se révéler idéale pour effectuer le traitement par le gaz réactif.

En outre, durant le traitement par le gaz réactif, la chaleur emmagasinée dans la masse de la paroi du réservoir diffuse vers la paroi interne, réalisant ainsi un réchauffement progressif de cette paroi qui se révèle bénéfique pour compenser dans le temps le ralentissement de la vitesse de réaction.

Il en résulte donc que le procédé selon l'invention permet :
- un raccourcissement sensible du délai de refroidissement avant traitement avec pour corollaire une cadence de production plus élevée
- une réfrigération initiale contrôlée et homogène de la paroi devant être traitée qui limite la vitesse de réaction en début de traitement
- un réchauffement progressif de cette paroi durant le traitement qui permet de compenser le ralentissement progressif de la vitesse de réaction.

Dans le procédé conforme à l'invention, le fluide gazeux assurant la réfrigération de la paroi interne du réservoir peut être soit un gaz inerte tel que l'azote, soit le gaz réactif choisi pour le traitement superficiel d'imperméabilisation.

Dans le premier cas, le refroidissement peut être obtenu lors de différentes étapes de la production du réservoir qui peuvent être combinées, à savoir :
- lors de l'expulsion de la paraison appelée à constituer le réservoir par moulage par soufflage, le fluide gazeux froid étant introduit dans ladite paraison au travers de la tête d'extrusion dès son expulsion.
- lors du soufflage du réservoir, le fluide gazeux froid étant exploité en tant que gaz de soufflage pour réaliser le moulage du réservoir.
- par introduction du fluide gazeux froid après un moulage classique du réservoir

Lorsqu'on opère selon cette technique, le gaz réactif introduit ensuite pour effectuer le traitement souhaité est injecté à température ambiante ou éventuellement croissante et ce, préférentiellement à pression partielle croissante.

Dans le second cas, le gaz réactif à basse température est introduit initialement dans le réservoir dès que son moulage par un procédé classique est terminé ou encore est utilisé en tant que fluide pour effectuer le moulage, la température du gaz injecté pouvant être éventuellement progressivement accrue.

Cette dernière technique présente les avantages suivants :
- le gaz réactif introduit à basse température limite automatiquement la vitesse de réaction initiale malgré le fait que la surface de la paroi inteme du corps creux se trouve au départ à une température élévée.
- l'énergie thermique libérée par la réaction est absorbée progressivement par le gaz réactif résiduel qui, dès lors s'échauffe progressivement ce qui permet également de compenser la chute dans le temps de la vitesse de réaction.
- le traitement est débuté sur un réservoir dont la paroi interne, non encore refoidie, se trouve donc à une température parfaitement homogène.

Les deux cas précités, utilisation d'un gaz inerte ou du gaz réactif comme fluide gazeux de réfrigération peuvent évidemment être combinés.

Le procédé conforme à l'invention convient spécialement pour des traitements d'imperméabilisation par fluoration superficielle au moyen de fluor ou d'un dérivé fluoré dilué dans a gaz inerte mais il reste évidemment d'application pour des traitements au moyen d'autres gaz réactifs tels que ceux utilisés pour des traitements de sulfonation, de chlorosulfonation, etc.

De même, le procédé convient particulièrement pour le traitement de réservoirs à carburant réalisés à partir de matières thermoplastiques comprenant une résine à base d'oléfines telle qu'un homopolymère d'oléfines telles que l'éthylène, le propylène, etc. ou un copolymère comportant au moins 50 % en poids d'unités dérivées d'oléfines, la matière thermoplastique préférée étant toutefois le polyéthylène mais il reste d'application pour le traitement de tout corps creux ou article réalisé en toute matière thermoplastique susceptible d'être rendue plus imperméable par traitement au moyen de gaz réactifs.

Le procédé selon l'invention et les avantages qui en découlent sont par ailleurs illustrés par les exemples qui sont donnés ci-après.

### Exemples 1R, 2R, 3R et 4

On traite en ligne par un gaz réactif (fluor dilué dans de l'azote) des réservoirs pour carburant en polyéthylène d'une capacité de 66 litres et d'une épaisseur moyenne de paroi de 5mm produits par moulage par extrusion soufflée en exploitant les conditions de production suivantes qui sont classiques pour les essais comparatifs 1R, 2R et 3R ou qui respectent le procédé selon l'invention pour l'essai 4.

Exemple 1R - Soufflage du réservoir au moyen d'azote à température ambiante durant 40 secondes suivi d'un traitement de fluoration classique en ligne (fluor dilué à 1,6 % dans de l'azote et se trouvant à température ambiante), la quantité de fluor injectée étant de 14 g. Le temps de traitement du réservoir s'élève à 35 secondes.

Exemple 2R - Soufflage du réservoir au moyen d'azote à température ambiante durant 75 secondes suivi d'un traitement de fluoration classique en ligne (fluor dilué à 2 % dans de l'azote et se trouvant à température ambiante), la quantité de fluor injectée étant de 23 g. Le temps de traitement du réservoir s'élève à 40 secondes.

Exemple 3R - Soufflage du réservoir et traitement de fluoration comme dans l'essai 2R mis à part que la quantité de fluor injectée est de 54 g et que la durée de traitement est de 50 secondes de façon à réaliser une fluoration très poussée.

Exemple 4 - Soufflage du réservoir au moyen d'azote à température ambiante suivi directement, conformément à l'invention, d'une introduction dans le réservoir moulé de 1 kg d'azote à une température de - 90 °C, ces étapes s'étendant sur une période totale de 40 secondes, puis traitement de fluoration classique en ligne (fluor dilué à 1,6 % dans de l'azote et se trouvant à température ambiante) la quantité de fluor injectée étant de 14 g. Le temps de traitement du réservoir s'élève à 35 secondes.

Les réservoirs ainsi obtenus, en double exemplaire, sont, après démoulage, remplis de carburant à 50 % de la capacité utile et stockés à 40 °C suivant la Directive européenne ECE 34 annexe 5. Les carburants utilisés sont respectivement de l'essence normalisée CEC-RF-01-A80 pure pour un exemplaire de réservoirs et un mélange de cette essence avec du méthanol dans un rapport volumique 85 % d'essence/15 % de méthanol pour l'autre exemplaire. Les pertes en poids de ces réservoirs sont ensuite mesurées toutes les semaines durant 6 mois. Le tableau 1, ci-après, donne les pertes de carburant exprimées en pourcent de celles des réservoirs non traités produits selon l'exemple 1R (mesurées à 40 °C; g/24h).

**Tableau 1**

| Exemple | essence à 100% | mélange essence/méthanol |
|---|---|---|
| 1R | 100% | 100% |
| 2R | 109 % | 64 % |
| 3R | 73 % | 32% |
| 4 | 64 % | 28 % |

Le tableau 1 montre que le procédé selon l'invention (exemple 4) conduit à d'excellents résultats par rapport aux exemples de comparaison 1R et 2R et même par rapport à l'exemple de comparaison 3R qui exige un temps de production nettement plus élevé et une consommation en gaz réactif accrue.

### Exemples 5R et 6

Dans ces exemples de comparaison (5R) et selon l'invention (6), on réalise par moulage par soufflage classique des résevoirs en polyéthylène d'une capacité de 60 litres et d'une épaisseur moyenne de paroi de 5,5 mm que l'on traite directement en ligne par fluoration (fluor dilué à 2 % dans de l'azote).

Dans les deux exemples, les réservoirs sont moulés par soufflage au moyen d'azote à température ambiante durant 60 secondes puis soumis à une fluoration poussée (fluor dilué à 2 % dans de l'azote), la quantité de fluor introduite étant de 45 g et la durée de traitement étant de 43 secondes.

Dans l'exemple 5R, de comparaison, le traitement est effectué au moyen du gaz réactif à température ambiante tandis que dans l'exemple 6, selon l'invention, le traitement est effectué au moyen de gaz réactif introduit à une température de - 70 °C.

Les réservoirs ainsi obtenus sont soumis à des tests identiques à ceux exposés dans les exemples 1R à 4, mis à part que les pertes ont été mesurées toutes les semaines durant 90 jours.

Le tableau 2, ci-après, donne les pertes de carburant exprimées en pourcent de celles des réservoirs non traités produits selon l'exemple 5R (mesurées à 40 °C; g/24h).

**Tableau 2**

| Exemples | Essence 100 % | Mélange essence/méthanol |
|---|---|---|
| 5R | 100% | 100% |
| 6 | 79% | 78% |

Le tableau 2 montre le gain appréciable réalisé grâce à l'invention en ce qui concerne l'imperméabilisation des réservoirs à carburant en polyéthylène.

## Revendications

1. Procédé pour la production de corps creux imperméables, tels que des réservoirs à essence, par moulage par extrusion soufflée à partir d'une matière thermoplastique dans lequel la paroi interne du corps creux moulé est directement traitée en ligne par un gaz réactif en vue d'accroître son imperméabilité **caractérisé en ce que**, en vue du traitement par le gaz réactif, la paroi interne du corps creux est refroidie superficiellement par un fluide gazeux introduit à une température au plus égale à - 50° C et que le gaz réactif introduit dans le corps creux est injecté à température croissante.

2. Procédé selon la revendication 1 **caractérisé en ce que** le fluide gazeux est introduit à une température comprise de - 60 à - 150°C.

3. Procédé selon l'une quelconque des revendications 1 et 2 **caractérisé en ce que** le fluide gazeux utilisé pour refroidir superficiellement la paroi interne du corps creux est un gaz inerte tel que de l'azote.

4. Procédé selon l'une quelconque des revendications 1 et 2 en ce que le fluide gazeux utilisé pour refroidir superficiellement la paroi interne du corps creux est un gaz réactif tel que du fluor éventuellement dilué dans un gaz inerte.

## Patentansprüche

1. Verfahren zur Herstellung von undurchlässigen Hohlkörpern, wie Benzinbehältern, aus einem thermoplastischen Material durch Extrusions-Blasformen, bei dem die Innenwand des geformten Hohlkörpers direkt in Reihe mit einem Reaktivgas im Hinblick darauf, ihre Undurchlässigkeit zu vergrößern, behandelt wird, **dadurch gekennzeichnet, daß** im Hinblick auf die Behandlung mit dem Reaktivgas die Innenwand des Hohlkörpers mit einem gasförmigen Fluid, das bei einer Temperatur von höchstens gleich - 50 °C eingeführt wird, an der Oberfläche abgekühlt wird, und daß der in dem Hohlkörper eingeführte Reaktivgas eingespritzt ist, während seine Temperatur erhöht ist.

2. Verfahren gemäß Anspruch 1, **dadurch gekennzeichnet, daß** das gasförmige Fluid bei einer Temperatur zwischen -60 und -150 °C eingeführt wird.

3. Verfahren gemäß einem der Ansprüche 1 und 2, **dadurch gekennzeichnet, daß** das gasförmige Fluid, das verwendet wird, um die Innenwand des Hohlkörpers an der Oberfläche abzukühlen, ein Inertgas wie Stickstoff ist.

4. Verfahren gemäß einem der Ansprüche 1 und 2, **dadurch gekennzeichnet, daß** das gasförmige Fluid, das verwendet wird, um die Innenwand des Hohlkörpers an der Oberfläche abzukühlen ein Reaktivgas wie Fluor, gegebenenfalls verdünnt in einem Inertgas, ist.

## Claims

1. Process for the production of impervious hollow bodies, such as petrol tanks, by extrusion blow-moulding from a thermoplastic material, in which the inner wall of the moulded hollow body is treated directly in line with a reactive gas with a view to increasing its imperviousness, **characterised in that**, with a view to the treatment with the reactive gas, the inner wall of the hollow body is superficially cooled by a gaseous fluid introduced at a temperature not exceeding - 50°C and that the reactive gas introduced in the hollow body is injected while raising its temperature.

2. Process according to Claim 1, **characterised in that** the gaseous fluid is introduced at a temperature of between -60 and -150°C.

3. Process according to any one of Claims 1 and 2, **characterised in that** the gaseous fluid employed for superficially cooling the inner wall of the hollow body is an inert gas such as nitrogen.

4. Process according to any one of Claims 1 and 2, **characterised in that** the gaseous fluid employed for superficially cooling the inner wall of the hollow body is a reactive gas such as fluorine, optionally diluted in an inert gas.
